# EUROPEAN PATENT APPLICATION

(11) **EP 4 618 248 A1**
(43) Date of publication of application: **17.09.2025**
(21) Application number: 24194291.1
(22) Date of filing: 13.08.2024
(51) Int. Cl.: H01M 10/647, H01M 10/658

(54) **BATTERY MODULE AND METHOD OF MANUFACTURING THE SAME**

(30) Priority: 12.03.2024 KR 20240034422
(71) Applicant: SAMSUNG SDI CO., LTD., Giheung-gu Yongin-si, Gyeonggi-do 17084 (KR)
(72) Inventor: KIM, Gang Yul, 16678 Suwon-si (KR)
(74) Representative: Marks & Clerk LLP

(57) **Abstract**

A battery module and a method of manufacturing a battery module are disclosed. A battery module includes a plurality of battery cells, a heat-insulating sheet between adjacent battery cells of the plurality of battery cells to block thermal energy transfer between the adjacent battery cells, and a fixing member to fix the heat-insulating sheet between the adjacent battery cells.

## Description

### BACKGROUND

### 1. Field

The present disclosure relates to a battery module and a method of manufacturing the same.

### 2. Description of the Related Art

In general, with rapidly increasing demand for portable electronics, such as laptops, video cameras, and mobile phones, and commercialization of robots and electric vehicles, research is actively being carried out to develop high-performance secondary batteries enabling repeated charging/discharging.

Secondary batteries may be used as a battery module or a battery pack formed of a plurality of unit battery cells connected in series and/or in parallel to provide a high energy density. The battery module or the battery pack may be formed by connecting electrode terminals of the plurality of unit cells to each other to meet a required amount of power and implement a high-power secondary battery of, for example, an electric vehicle.

The above information disclosed in this Background section is provided for enhancement of understanding of the background of the present disclosure and, therefore, may contain information that does not constitute related (or prior) art.

### SUMMARY

According to an aspect of embodiments of the present invention, a battery module capable of blocking the transfer of thermal energy between battery cells caused by flames in the event of a thermal runaway is provided.

The above and other aspects and features of the present disclosure will be described in or will be apparent from the following description of some embodiments of the present disclosure.

According to one or more embodiments of the present invention, a battery module includes a plurality of battery cells, a heat-insulating sheet between adjacent battery cells of the plurality of battery cells to block thermal energy transfer between the battery cells (e.g. between the adjacent battery cells), and a fixing member to fix the heat-insulating sheet between the adjacent battery cells.

The heat-insulating sheet may include mica.

The heat-insulating sheet may include aerogel.

The heat-insulating sheet may include a first sheet portion between the adjacent battery cells to block conductive thermal energy, and a second sheet portion extending from the first sheet portion and in contact with an upper surface of a battery cell of the adjacent battery cells to block convective thermal energy.

The heat-insulating sheet may be formed into the first sheet portion and the second sheet portion through bending.

A rupture portion corresponding to a vent hole of the battery cell may be formed in the second sheet portion.

The fixing member may include a double-sided tape attached to the heat-insulating sheet.

The double-sided tape may be attached to each of the first surface and the second surface of the heat-insulating sheet, and the double-sided tape may be provided as a plurality of double-sided tapes that are spaced apart from each other on opposite sides of the heat-insulating sheet.

The double-sided tape may include a first double-sided tape attached to the first surface of the heat-insulating sheet to be attached to the battery cell, and a second double-sided tape attached to the second surface of the heat-insulating sheet to be attached to the adjacent battery cell.

The heat-insulating sheet may have an adhesive opening where the first double-sided tape and the second double-sided tape are attached to enhance a binding force.

The adhesive opening may include an upper adhesive opening that is open such that upper ends of the first double-sided tape and the second double-sided tape are attached to each other, and a lower adhesive opening that is open such that lower ends of the first double-sided tape and the second double-sided tape are attached to each other.

A center of the adhesive opening may be formed within 10% to 20% of a long side length of the heat-insulating sheet from a left or right end of the heat-insulating sheet.

The upper adhesive opening may be formed within 10% to 20% of a short side length of the heat-insulating sheet from an upper end of the heat-insulating sheet.

The adhesive opening may occupy an area within 3% to 7% of an area of a front surface of the heat-insulating sheet.

The battery module may further include an insulating structure coupled to the adhesive opening.

The insulating structure may be formed to correspond to an area of the adhesive opening to block the adhesive opening, and the insulating structure may be coupled to the adhesive opening by a binding portion.

According to one or more embodiments of the present invention, a method of manufacturing a battery module includes attaching a battery cell to a first surface of a heat-insulating sheet by a double-sided tape, and attaching a second surface of the heat-insulating sheet to which the battery cell is attached to a previous-side battery cell by another double-sided tape, wherein the (step of) attaching the battery cell and the (step of) attaching the second surface of the heat-insulating sheet are repeated a number of times. For example, they may be repeated a set number of times.

The battery cell may be inserted into a module jig, and the (step of) attaching the second surface of the heat-insulating sheet may be performed in the module jig.

Before the (step of) attaching the battery cell, the double-sided tapes may be attached to the first surface and the second surface of the heat-insulating sheet, and the double-sided tapes may be attached to each other through an adhesive opening of the heat-insulating sheet.

The double-sided tapes may include a plurality of double-sided tapes that are separately attached to opposite sides of the heat-insulating sheet, and the adhesive opening may be blocked by an insulating structure.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings.
FIG. 1 is a part-exploded perspective view schematically illustrating a configuration of a battery module according to an embodiment of the present invention;
FIG. 2 is a perspective view schematically illustrating a configuration of a battery cell according to an embodiment of the present invention;
FIG. 3 is a plan view schematically illustrating a configuration of the battery cell according to an embodiment of the present invention;
FIG. 4 is a cross-sectional view schematically illustrating a configuration of the battery cell according to an embodiment of the present invention;
FIG. 5 is a part-exploded view illustrating the battery module according to an embodiment of the present invention, with some components shown separated to describe a heat-insulating sheet;
FIG. 6 is a perspective view schematically illustrating a configuration of the heat-insulating sheet according to an embodiment of the present invention;
FIG. 7 is a perspective view schematically illustrating a configuration of a heat-insulating sheet and a fixing member according to an embodiment of the present invention;
FIG. 8 is a perspective view of the heat-insulating sheet and the fixing member of FIG. 7 viewed from another angle;
FIG. 9 is a front view for describing an arrangement of double-sided tapes on the heat-insulating sheet according to an embodiment of the present invention;
FIG. 10 is an exploded perspective view schematically illustrating a blocking configuration of an adhesive opening according to an embodiment of the present invention;
FIG. 11 is a cross-sectional view schematically illustrating a blocking configuration of the adhesive opening according to an embodiment of the present invention;
FIG. 12 is a perspective view schematically illustrating a configuration of the battery cell to which the heat-insulating sheet according to an embodiment of the present invention is attached;
FIG. 13 is a cross-sectional view taken along the line A-A of FIG. 12;
FIG. 14 is a cross-sectional view taken along the line B-B of FIG. 12;
FIG. 15 is a perspective view schematically illustrating a battery cell stack to which the heat-insulating sheet according to an embodiment of the present invention is attached;
FIG. 16 is a cross-sectional view taken along the line C-C of FIG. 15, and includes an enlarged portion;
FIG. 17 is a flowchart illustrating a method of manufacturing a battery module according to an embodiment of the present invention;
FIG. 18 is a view illustrating processes of the method of manufacturing the battery module according to an embodiment of the present invention; and
FIG. 19 is a view illustrating an operation of the method of manufacturing the battery module according to an embodiment of the present invention.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having a meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein are to be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

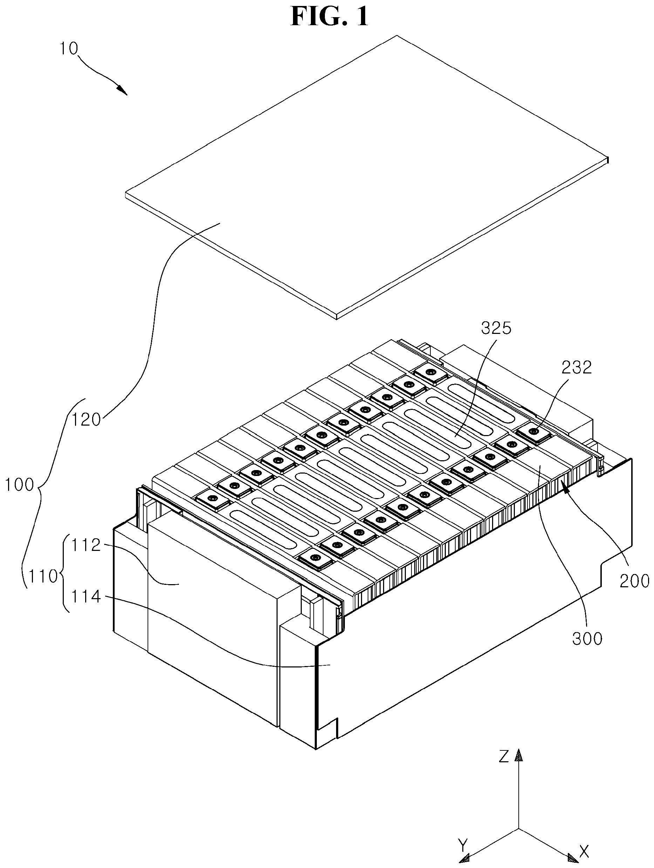

FIG. 1 is a perspective view schematically illustrating a configuration of a battery module according to an embodiment of the present invention.

Referring to FIG. 1, a battery module 10 according to the present embodiment may include a housing 100 and battery cells 200.

The housing 100 may support the battery cells 200 and function as a configuration for protecting the battery cells 200 from external impact or foreign substances. The housing 100 may provide a space for accommodating the battery cells 200 therein.

The housing 100 may include a housing body 110 and a housing cover 120.

The housing body 110 may be formed to have a box shape, with a hollow interior and an open side. As an example, the open side of the housing body 110 may be disposed to face upward based on FIG. 1. However, a cross-sectional shape of the housing body 110 is not limited to a quadrangular shape, as shown in FIG. 1, and may have any of various shapes, such as any of a polygonal shape, a circular shape, and an oval shape.

The housing cover 120 may be coupled to the housing body 110 and may close an inner space of the housing body 110. As an example, the housing cover 120 may be formed to have a generally plate shape. The housing cover 120 may be disposed to face the open side of the housing body 110, for example, an upper side of the housing body 110. The housing cover 120 may be fixed to the housing body 110 by any of various types of coupling methods, such as any of bolting-coupling, welding-coupling, and fitting-coupling.

The housing body 110 may be formed with end bodies 112 disposed at front and rear ends thereof, and side bodies 114 disposed at side surfaces thereof.

The battery cells 200 may function as a unit structure configured to store and supply power in the battery module 10. The battery cells 200 may be disposed inside the housing 100.

One or more battery cells 200 may be provided. A case in which a plurality of battery cells 200 is provided is illustrated by way of example in FIG. 1, but the battery module 10 is not limited thereto, and the battery cells 200 may be provided as a single battery cell 200.

When the plurality of battery cells 200 is provided, the plurality of battery cells 200 may be arranged in a plurality of rows inside the housing 100. As an example, the plurality of battery cells 200 may be arranged in the plurality of rows in a length direction (a Y-axis direction based on FIG. 1) of the housing 100. However, an arrangement form of the plurality of battery cells 200 is not limited thereto, and the plurality of battery cells 200 may be arranged in a plurality of rows in a width direction (an X-axis direction based on FIG. 1) of the housing 100, or in a plurality of rows in length and width directions of the housing 100, or both.

Herein, a case in which the or each battery cell 200 is a lithium-ion secondary battery and has a prismatic shape will be described by way of example. However, the present invention is not limited thereto, and the or each battery cell 200 may be a lithium polymer battery or a cylindrical battery, for example.

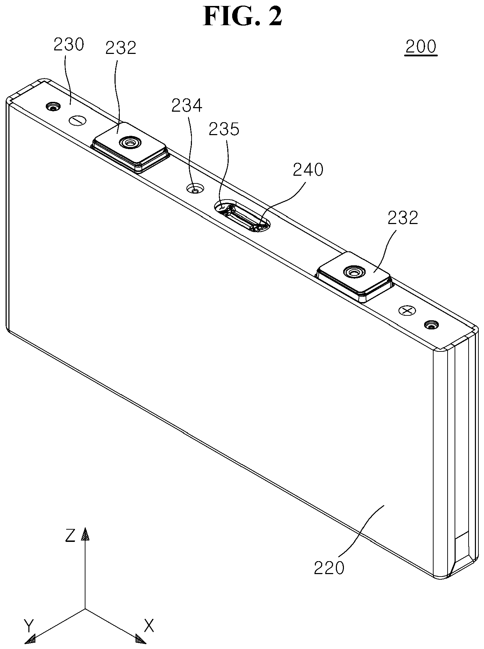

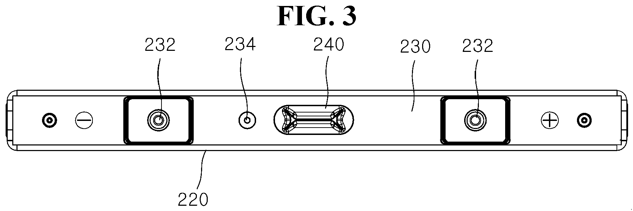

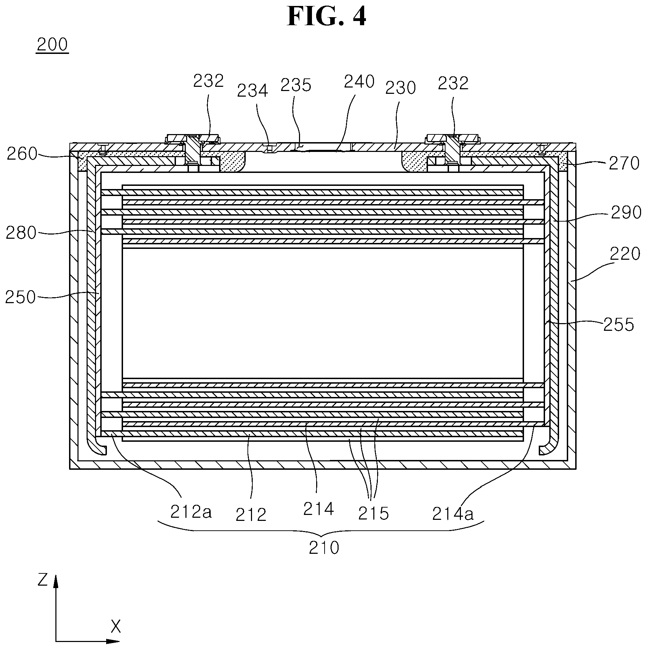

FIG. 2 is a perspective view schematically illustrating a configuration of the battery cell 200 according to an embodiment of the present invention; FIG. 3 is a plan view schematically illustrating a configuration of the battery cell 200 according to an embodiment of the present invention; and FIG. 4 is a cross-sectional view schematically illustrating a configuration of the battery cell 200 according to an embodiment of the present invention.

Referring to FIGS. 2 to 4, the battery cell 200 may include an electrode assembly 210, a cell case 220, a cap plate 230, and a vent plate 240.

The electrode assembly 210 may include a positive electrode 212, a negative electrode 214, and a separator 215 disposed between the positive electrode 212 and the negative electrode 214.

Each of the positive electrode 212 and the negative electrode 214 may include a coated portion, which is a region in which an active material is coated on a current collector formed of a thin metal foil, and uncoated portions 212a and 214a that are regions to which the active material is not coated.

In an embodiment, the electrode assembly 210 may be wound in a jelly roll shape after the separator 215, which is an insulator, is interposed between the positive electrode 212 and the negative electrode 214. However, the electrode assembly 210 is not limited to this shape, and the electrode assembly 210 may have a stacked structure in which the positive electrode 212 and the negative electrode 214 each composed of a plurality of sheets are alternately stacked with the separator 215 interposed therebetween.

The electrode assembly 210 may be formed as a single electrode assembly 210, or of a plurality of electrode assemblies 210.

The cell case 220 may form an overall exterior of the battery cell 200. The cell case 220 may accommodate the electrode assembly 210 therein. As an example, the cell case 220 may be formed to have a rectangular parallelepiped shape of which a surface is open. The open surface of the cell case 220 may be disposed to face the housing cover 120 in a vertical direction in the housing 100.

In an embodiment, the cell case 220 may include a conductive metal material, such as aluminum, an aluminum alloy, or nickel-plated steel.

The cap plate 230 may be coupled to the cell case 220 and may seal the cell case 220. As an example, the cap plate 230 may be formed to have a flat plate shape. The cap plate 230 may be disposed to cover the open side of the cell case 220 from above the cell case 220. The cap plate 230 may be coupled to the cell case 220 by any of various types of coupling methods, such as any of welding-coupling, bolting-coupling, and fitting-coupling. In an embodiment, the cap plate 230 may be made of a conductive material including at least one of aluminum and an aluminum alloy.

The cap plate 230 may include terminals 232.

The terminals 232 may pass through the cap plate 230, and may be installed to protrude to the outside of the cap plate 230. In an embodiment, an outer circumferential surface of an upper column of the terminal 232 may be screw-processed and may be fixed to the cap plate 230 with a nut. However, the present invention is not limited thereto, and the terminal 232 may be riveted by having a rivet structure or may be welded to the cap plate 230, for example.

The terminals 232 protruding to the outside of the cap plate 230 may be formed in a pair. The pair of terminals 232 may be individually connected to the positive electrode 212 and the negative electrode 214 of the electrode assembly 210. Accordingly, the pair of terminals 232 may function as positive and negative terminals of the battery cell 200, respectively.

As an example, the terminal 232 may be electrically connected to a current collector, which includes first and second current collectors 250 and 255 (herein, referred to as positive and negative electrode current collectors) bonded to the uncoated portion 212a for the positive electrode 212 or the uncoated portion 214a for the negative electrode 214 by welding. For example, the pair of terminals 232 may be bonded to the positive and negative electrode current collectors 250 and 255, respectively, by welding. However, the present invention is not limited thereto, and the terminals 232 and the positive and negative electrode current collectors 250 and 255 may be formed by being integrally coupled to each other, for example.

In an embodiment, the cap plate 230 may further include an electrolyte inlet 234 in which a sealing cap may be installed.

In an embodiment, the cap plate 230 may further include a vent hole 235.

The vent hole 235 may be formed to have a shape of a hole passing through both, or opposite, surfaces of the cap plate 230. The vent hole 235 may function as a configuration that provides a path through which a flame, gas, smoke, or the like, formed inside the cell case 220, is discharged from the battery cell 200 in the event of a thermal runaway of the battery cell 200. A lower side of the vent hole 235 may be connected to an inner space of the cell case 220. An upper side of the vent hole 235 may be connected to an outer space of the cap plate 230. A cross-sectional shape of the vent hole 235 may be varied in design into any of various shapes, such as any of an oval shape, a circular shape, and a polygonal shape.

The vent plate 240 may be opened and closed in conjunction with a change in an internal pressure of the cell case 220. That is, the vent plate 240 may remain closed during normal operation of the battery cell 200 to seal the cell case 220. The vent plate 240 may be opened as the internal pressure of the cell case 220 rises above a certain amount (e.g., a set amount) due to overcharge of the battery cell 200 or fire occurrence, and may discharge a flame, gas, smoke, and the like generated from the inside of the cell case 220 to the outside of the cell case 220.

An insulation member may be installed between the electrode assembly 210 and the cap plate 230. The insulation member may include first and second lower insulation members 260 and 270, and each of the first and second lower insulation members 260 and 270 may be installed between the electrode assembly 210 and the cap plate 230.

An end of a separation member, which may be installed to face a side surface of the electrode assembly 210, may be installed between the insulation member and the terminal 232.

The separation member may include first and second separation members 280 and 290.

First ends of the first and second separation members 280 and 290, which may be installed to face respective side surfaces of the electrode assembly 210, may be installed between the first and second lower insulation members 260 and 270 and the pair of terminals 232, respectively.

The terminals 232 welded to the positive and negative electrode current collectors 250 and 255 may be coupled to the first ends of the first and second lower insulation members 260 and 270 and the first and second separation members 280 and 290, respectively.

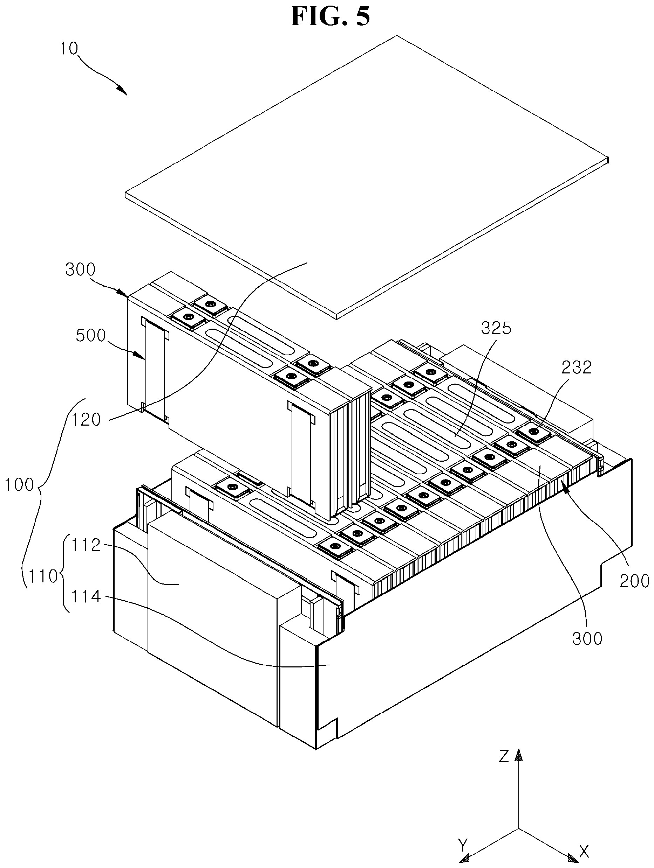

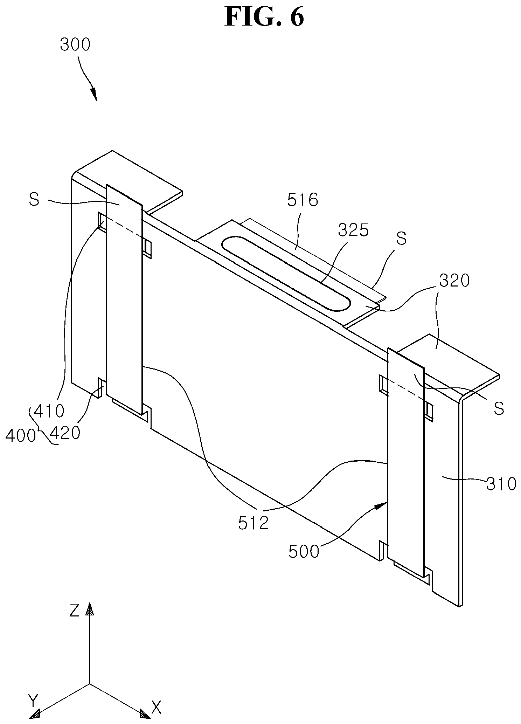

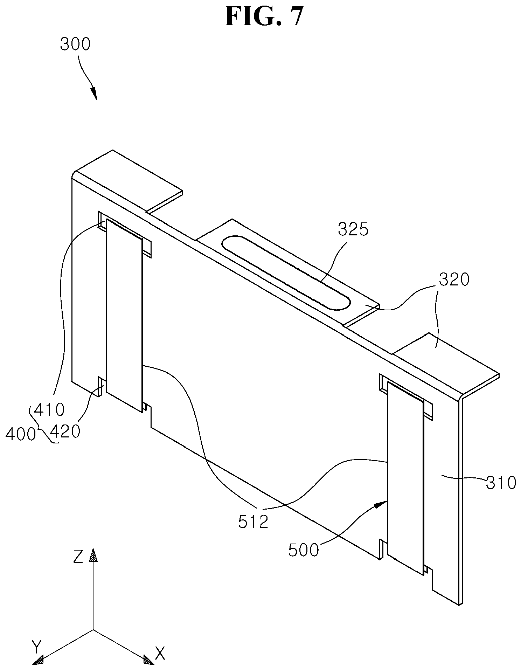

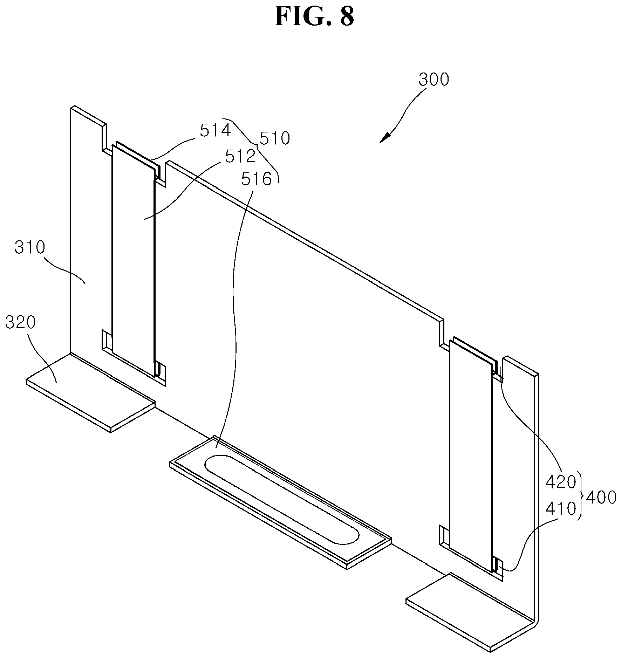

FIG. 5 is a view illustrating the battery module according to an embodiment of the present invention, with some components shown separated to describe the heat-insulating sheet; FIG. 6 is a perspective view schematically illustrating a configuration of the heat-insulating sheet according to an embodiment of the present invention; FIG. 7 is a perspective view schematically illustrating a configuration of the heat-insulating sheet and a fixing member according to an embodiment of the present invention; and FIG. 8 is a perspective view of the heat-insulating sheet and the fixing member of FIG. 7 viewed from another angle.

Referring to FIGS. 5 to 8, the battery module 10 according to an embodiment of the present invention may include the battery cell 200, a heat-insulating sheet 300, and a fixing member 500.

A plurality of battery cells 200 may be provided, and the plurality of battery cells 200 may be disposed in a plurality of rows inside the housing 100.

The heat-insulating sheet 300 may be provided between a battery cell 200 and an adjacent battery cell 200 to function as a configuration to block thermal energy transfer. More specifically, the heat-insulating sheet 300 may be provided between the battery cells 200 to function as a configuration that may impede or block a propagation of flame or high-temperature thermal energy to prevent or substantially prevent chain ignition in the battery module 10.

Herein, for convenience of description, the battery cell 200 attached to the second surface of the heat-insulating sheet 300 is referred to as a previous-side (previously installed) battery cell 200.

The heat-insulating sheet 300 may include a material having at least one property among flame retardancy, heat resistance, heat insulation, and insulation properties. As an example, the heat-insulating sheet 300 may be manufactured including mica capable of performing a function of preventing or substantially preventing heat and/or flame propagation.

In an embodiment, the heat-insulating sheet 300 may be manufactured including aerogel. As an example, the heat-insulating sheet 300 may be manufactured including mica and aerogel.

The heat-insulating sheet 300 may include a first sheet portion 310 provided between the battery cells 200 to block conductive thermal energy, and a second sheet portion 320 formed to extend from the first sheet portion 310 and in contact with an upper surface of the battery cell 200 to block convective thermal energy.

As an example, the first sheet portion 310 may be disposed between the battery cells 200, and the second sheet portion 320 may be disposed to face an upper surface of the battery cell 200 on a side.

That is, the heat-insulating sheet 300 may be formed with an inverse "L"-shaped cross-sectional shape.

In an embodiment, the first sheet portion 310 and the second sheet portion 320 may be integrally formed. As an example, the heat-insulating sheet 300 may be formed into the first sheet portion 310 and the second sheet portion 320 through bending.

In addition, the second sheet portion 320 may have a rupture portion 325 corresponding to the vent hole 235 of the battery cell 200. The rupture portion 325 may rupture as the internal pressure of the cell case 220 rises above a certain pressure (e.g., a set pressure), and may open along with the vent plate 240.

In an embodiment, the rupture portion 325 is formed with a small rigidity, and may function as a configuration that is easily separated during a thermal runaway to enable smooth gas discharge.

The fixing member 500 may function as a configuration that allows the heat-insulating sheet 300 to be fixed between the battery cells 200. The fixing member 500 may include a double-sided tape 510 attached to the heat-insulating sheet 300.

The double-sided tape 510 may be provided in a pair spaced apart from each other on a first surface and a second, or opposite, surface of the heat-insulating sheet 300, respectively. See FIGS. 7 and 8. Here, a first surface of the heat-insulating sheet 300 refers to an inner surface of the heat-insulating sheet 300 (in a Y-axis direction based on FIG. 7), and the second surface thereof may refer to an outer surface of the heat-insulating sheet 300 (opposite to the Y-axis based on FIG. 7).

As an example, the double-sided tape 510 may include a first double-sided tape 512 that is attached to the first surface of the heat-insulating sheet 300 to be attached to one of the battery cells 200, and a second double-sided tape 514 that is attached to the second surface of the heat-insulating sheet 300 to be attached to the previous-side battery cell 200.

As an example, the double-sided tape 510 may include a release paper S to prevent or substantially prevent foreign substances from staining thereon. The release paper S may be formed longer than the double-sided tape 510 so as to be easily separated from the double-sided tape 510.

As shown in FIG. 8, the double-sided tape 510 may include a third double-sided tape 516 attached to an inner surface of the second sheet portion 320 to adhere the second sheet portion 320 and the upper surface of the battery cell 200 to each other.

Thus, the first double-sided tapes 512 may be attached to both, or opposite, sides of the first surface of the first sheet portion 310, the second double-sided tapes 514 may be attached to both, or opposite, sides of the second surface of the first sheet portion 310, and the third double-sided tape 516 may be attached to the inner surface of the second sheet portion 320. In an embodiment, the battery cell 200 and the heat-insulating sheet 300 may be attached to each other at two perpendicular surfaces by the first and third double-sided tapes 512 and 516, which are attached to both, or opposite, sides of the first surface of the first sheet portion 310 and the inner surface of the second sheet portion 320, which may improve the adhesion between the heat-insulating sheet 300 and the battery cell 200.

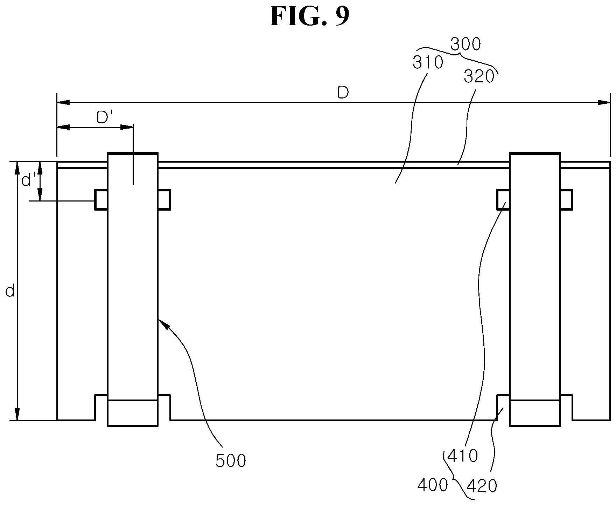

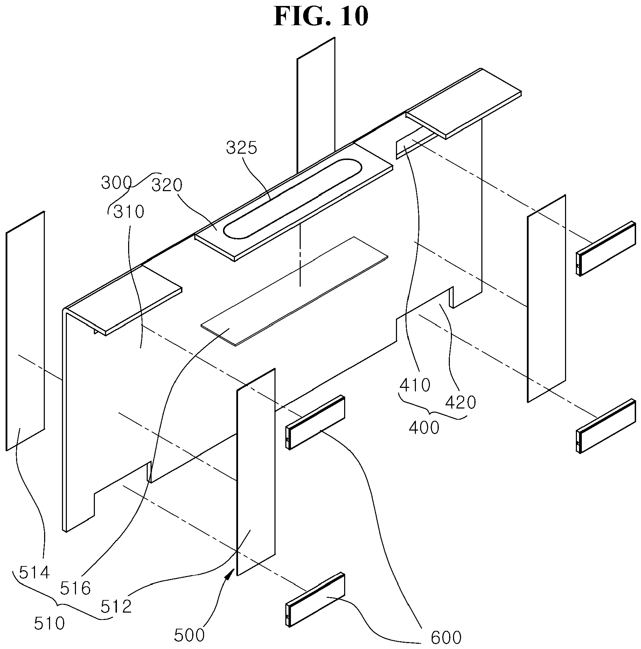

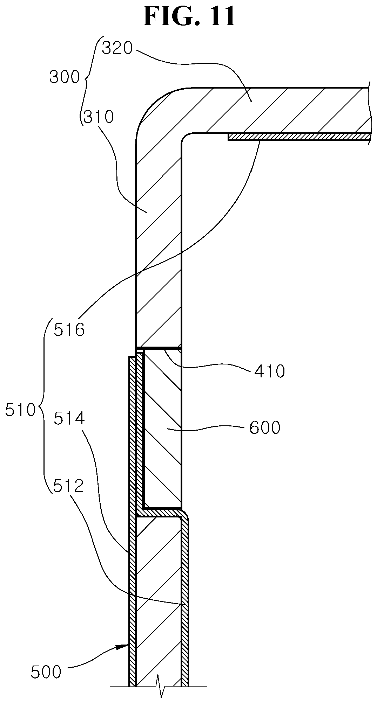

FIG. 9 is a front view for describing an arrangement of the double-sided tapes on the heat-insulating sheet according to an embodiment of the present invention; FIG. 10 is a perspective view schematically illustrating a blocking configuration of an adhesive opening according to an embodiment of the present invention; and FIG. 11 is a cross-sectional view schematically illustrating a blocking configuration of the adhesive opening according to an embodiment of the present invention.

Referring to FIGS. 9 to 11, the heat-insulating sheet 300 may include adhesive openings 400 where the first double-sided tape 512 and the second double-sided tape 514 are attached to enhance a binding force.

The adhesive opening 400 may be formed as a through hole formed in the first sheet portion 310 of the heat-insulating sheet 300. The adhesive opening 400 may function as a configuration that forms a space in which the first double-sided tape 512 attached to the first surface of the first sheet portion 310 of the heat-insulating sheet 300 and the second double-sided tape 514 attached to the second surface thereof may be attached to each other.

The adhesive opening 400 may include an upper adhesive opening 410 that is open for upper ends of the first double-sided tape 512 and the second double-sided tape 514 to be attached to each other, and a lower adhesive opening 420 that is open for lower ends of the first double-sided tape 512 and the second double-sided tape 514 to be attached to each other.

The adhesive openings 400 may be positioned in pairs spaced apart on both, or opposite, sides of the first sheet portion 310 to correspond to the first and second double-sided tapes 512 and 514.

The adhesive opening 400 and the double-sided tape 510 are disposed according to heat distribution over an area of the battery cell 200. That is, the battery cells 200 are disposed to be spaced apart on both, or opposite, sides of the first sheet portion 310 to prevent or substantially prevent heat from being transferred to the adjacent battery cells 200 through the adhesive openings 400 because the temperature in a central portion of the battery cells 200 is the highest.

As an example, as shown in FIG. 9, the adhesive opening 400 may be formed such that a center D' is within 10% to 20% of a long side length D of the heat-insulating sheet 300 from a left or right end of the heat-insulating sheet 300.

In addition, as an example, the upper adhesive opening 410 may have the center d' formed within 10% to 20% of a short side length d of the heat-insulating sheet 300 from an upper end of the heat-insulating sheet 300.

In addition, as an example, the adhesive opening 400 may occupy an area within 3% to 7% of an area of a front surface of the heat-insulating sheet 300.

This configuration may prevent or substantially prevent the deterioration of heat insulation performance due to the arrangement and size of the adhesive opening 400, and the thermal energy transfer to the adjacent battery cell 200 may be minimized or reduced by the arrangement and size of the adhesive opening 400. As described above, the first and second double-sided tapes 512 and 514 are attached to each other through the adhesive opening 400, the battery cell 200 is attached to the first surface of the heat-insulating sheet 300, and the heat-insulating sheet 300 to which the battery cell 200 is attached is attached to the previous-side battery cell 200, such that the adhesion of the heat-insulating sheet 300 and the battery cells 200, as well as a binding force between the battery cells 200 and the previous-side battery cell 200, may be enhanced.

Accordingly, the attachment between the battery cells 200 is enhanced by the mutual bonding through the double-sided tapes 510 and the adhesive opening 400, thereby providing a robust battery module 10.

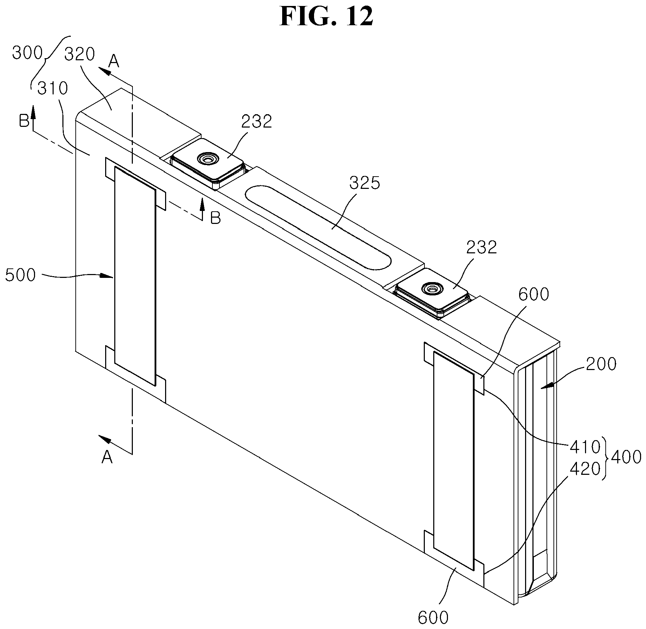

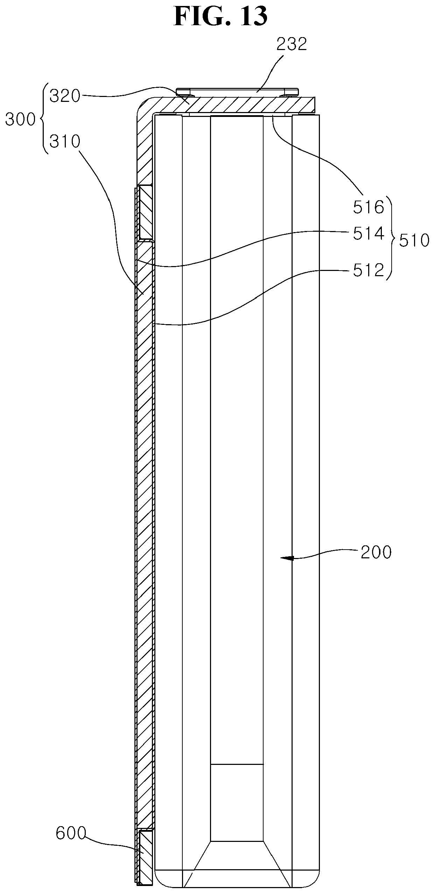

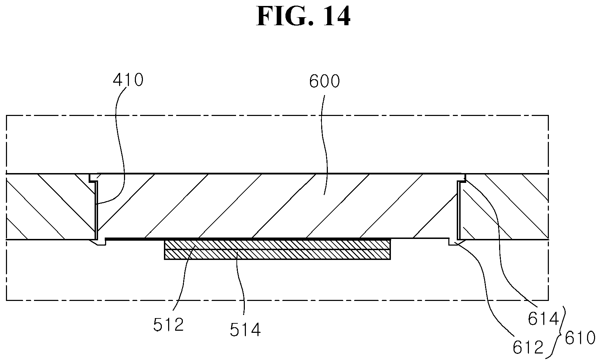

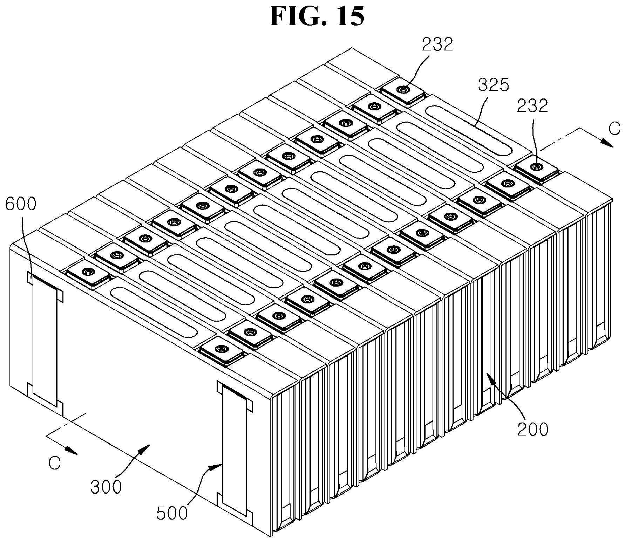

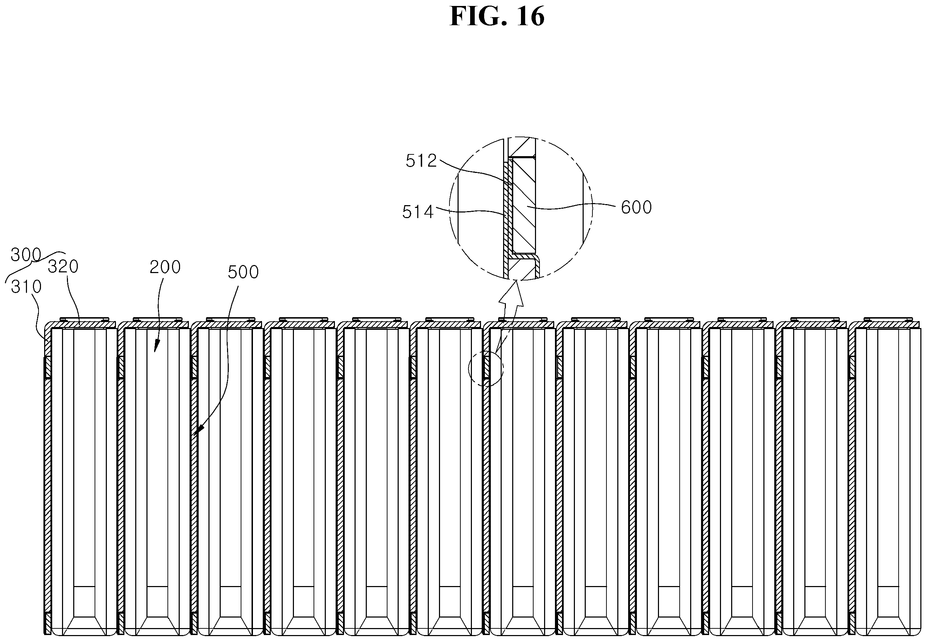

FIG. 12 is a perspective view schematically illustrating a configuration of the battery cell to which the heat-insulating sheet according to an embodiment of the present invention is attached; FIG. 13 is a cross-sectional view taken along the line A-A of FIG. 12; FIG. 14 is a cross-sectional view taken along the line B-B of FIG. 12; FIG. 15 is a perspective view schematically illustrating a battery cell stack to which the heat-insulating sheet according to an embodiment of the present invention is attached; and FIG. 16 is a cross-sectional view taken along the line C-C of FIG. 15.

Referring to FIGS. 12 to 14, an insulating structure 600 may be coupled to the adhesive opening 400.

The insulating structure 600 may function as a configuration for preventing or substantially preventing deterioration of heat insulation performance of the heat-insulating sheet 300. As an example, the insulating structure 600 may include any of mica and aerogel similar to the heat-insulating sheet 300.

In addition, the insulating structure 600 may be formed to correspond to an area of the adhesive opening 400 to block the adhesive opening 400, and may be coupled to the adhesive opening 400 by binding portions 610. See FIG. 14.

As an example, the binding portions 610 may include hooks 612 formed on both side surfaces of a front end of the insulating structure 600, and locking protrusions 614 formed on both, or opposite, side surfaces of a rear end of the insulating structure 600. That is, as shown in FIG. 12 and FIG. 14, the insulating structure 600 may be easily inserted into the adhesive opening 400 by the hooks 612, and fixed to the adhesive opening 400 by the hooks 612 and the locking protrusions 614.

In the present embodiment, the binding portions 610 are illustrated as having the hooks 612 and the locking protrusions 614, but the present invention is not limited thereto, and may be changed in design to have any of various structures, forcible fitting, separate adhesive tapes, or the like capable of fixing the insulating structure 600 to the adhesive opening 400.

The insulating structure 600 may be attached to the adhesive opening 400 after the first and second double-sided tapes 512 and 514 are attached to each other through the adhesive opening 400 in a state in which the release paper S is separated. Here, since the binding portions 610 are formed on both, or opposite, sides of the insulating structure 600, the binding portion 610 may be coupled without interference with the first and second double-sided tapes 512 and 514.

As shown in FIGS. 15 and 16, in a state in which the insulating structure 600 is coupled, the process of attaching the battery cell 200 to the first surface of the heat-insulating sheet 300 by the first double-sided tapes 512 and the third double-sided tape 516, and attaching the second surface of the heat-insulating sheet 300, to which the battery cell 200 is attached, to the previous-side battery cell 200 by the second double-sided tapes 514 may be repeated a number (e.g., a set number) of times to form the battery module 10.

Herein, a method of manufacturing the battery module according to an embodiment of the present invention will be described.

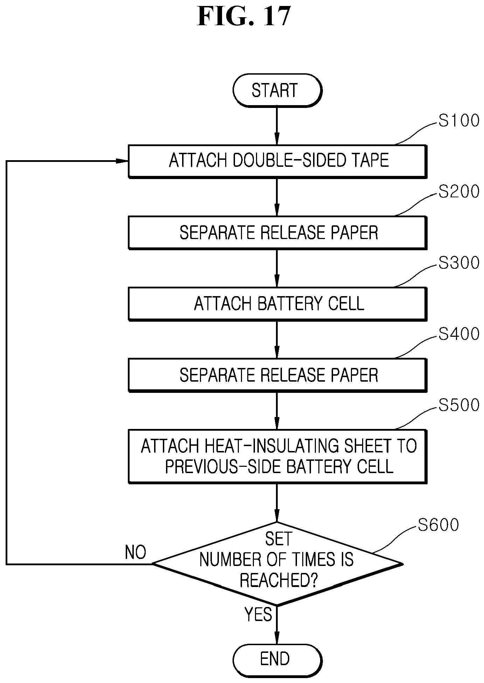

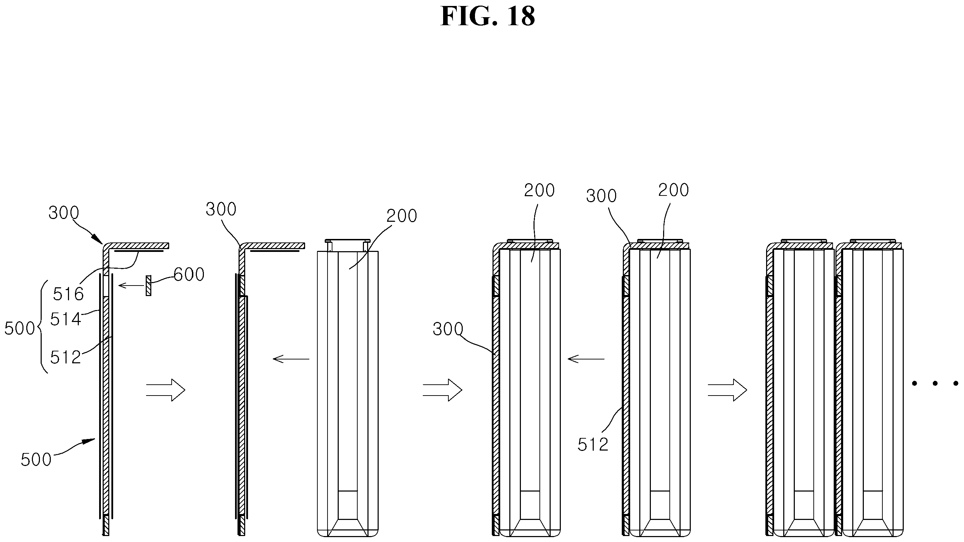

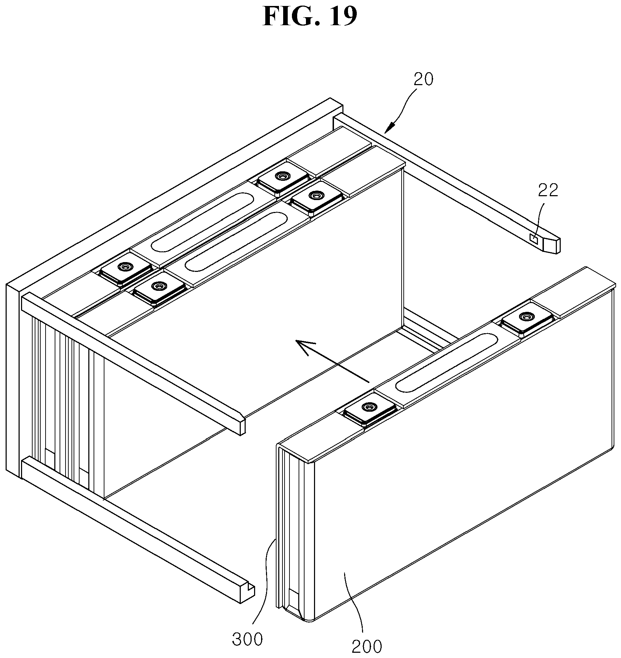

FIG. 17 is a flowchart illustrating a method of manufacturing the battery module according to an embodiment of the present invention; FIG. 18 is a view illustrating processes of the method of manufacturing the battery module according to an embodiment of the present invention; and FIG. 19 is a view illustrating an operation of the method of manufacturing the battery module according to an embodiment of the present invention.

Referring to FIGS. 17 to 19, a method of manufacturing the battery module 10 according to an embodiment of the present invention includes a first operation or step of attaching the battery cell 200 to a surface of the heat-insulating sheet 300 by the double-sided tape 510, and a second operation or step of attaching another surface of the heat-insulating sheet 300, to which the battery cell 200 is attached, to a previous-side battery cell 200 by the double-sided tape 510, and the first and second operations or steps may be repeated a number (e.g., a set number) of times.

Before the first operation, a preparation operation or step of attaching the heat-insulating sheet 300 may be performed first. In the preparation operation, the double-sided tapes 510 are attached to a first surface and a second surface of the heat-insulating sheet 300, and the double-sided tapes 510 are attached to each other through the adhesive opening 400 of the heat-insulating sheet 300, and, as the process of covering the adhesive opening 400, the first double-sided tapes 512 are attached by being spaced apart from each other on both sides of the first surface of the first sheet portion 310 of the heat-insulating sheet 300, the second double-sided tapes 514 are attached by being spaced apart from each other on both sides of the second surface of the first sheet portion 310, and the third double-sided tape 516 is attached to a bottom surface of the second sheet portion 320 (S100).

Thereafter, the release papers S are separated from the first double-sided tape 512 and the third double-sided tape 516, and the first double-sided tape 512 is attached to the second double-sided tape 514 through the adhesive opening 400 (S200).

In the above state, the adhesive opening 400 is covered by the insulating structure 600. The binding portions 610 including the hooks 612 and the locking protrusions 614 are formed in the insulating structure 600 to be fixed to the adhesive opening 400.

Once the preparation operation is completed as described above, the first operation is performed. That is, the battery cell 200 may be attached to the first surface of the heat-insulating sheet 300 by the first double-sided tape 512 (S300).

Thereafter, the release papers S are separated from the second double-sided tapes 514 attached to the second surface of the heat-insulating sheet 300 (S400), and the adjacent battery cells 200 are attached to each other by attaching the second surface of the heat-insulating sheet 300 to the previous-side battery cell 200 (S500).

As described above, the first and second operations are repeated a number of times (e.g., a set number of times) and a capacity (e.g., a set capacity) is determined (S600) to form the battery module.

In an embodiment, the attachment process of the battery cell 200 may be performed by a module jig 20.

As an example, the battery cell 200, which is the first battery cell to which the heat-insulating sheet 300 is attached, may be inserted into the module jig 20, and the second operation may be performed in the module jig 20.

As shown in FIG. 19, the module jig 20 is formed to form a space into which the battery cell 200 may be inserted, and to extend in the length direction to accommodate a number (e.g., a set number) of battery cells. The space of the module jig 20 may be formed as a space corresponding to a perimeter of the battery cell 200 such that the battery cells 200 to which the heat-insulating sheet 300 is attached may be attached in a same line.

Thus, after the battery cell 200, which is the first battery cell to which the heat-insulating sheet 300 is attached, is inserted, the release paper S is sequentially separated from the second double-sided tapes 514 (S400), and when the battery cell 200 to which the heat-insulating sheet 300 is attached is inserted, the battery cell 200 to which the heat-insulating sheet 300 is attached may be attached to the second surface of the previous-side battery cell 200, which is the previously installed battery cell 200.

In an embodiment, a sensor 22 capable of counting the number of battery cells 200 to be inserted may be provided in the module jig 20. The number of battery cells 200 being attached is counted by the sensor 22 to determine whether the number (e.g., the set number) of battery cells 200 are attached to each other through the heat-insulating sheet 300 to determine whether a set capacity is reached (S600). When the set capacity is reached, a desired stack of battery cells 200 may have been formed as shown in FIG. 15.

Thereafter, the battery module 10 may be formed by separating the stack of battery cells 200 from the module jig 20 and coupling the housing 100 to the stack.

As an example, a portion of the housing body 110 may be first inserted into the module jig 20. The battery module 10 may be formed through a process in which the end body 112 and the side body 114 at a side are inserted into the module jig 20, the release paper S is sequentially separated from the second double-sided tapes 514, the battery cell 200 to which the heat-insulating sheet 300 is attached is inserted, and the end body at another side is coupled to a distal end of the module jig 20.

When only the battery cells 200 are inserted into the module jig 20, the battery cell 200 to which the second double-sided tapes 514 of the heat-insulating sheet 300 are initially attached enters in a state in which the release paper S is not removed, but when a portion of the housing 100 is inserted, the battery cell 200 to which the second double-sided tapes 514 are initially attached enters in a state in which the release paper S is removed.

According to one or more embodiments of the present invention, a heat-insulating sheet is provided between battery cells to block the transfer of thermal energy to adjacent battery cells caused by flames in the event of a thermal runaway, thereby preventing or substantially preventing a chain ignition in a battery module.

A heat-insulating sheet according to one or more embodiments of the present invention is configured by integrating a first sheet portion that blocks conductive thermal energy between battery cells and a second sheet portion that blocks convective thermal energy moving to an upper portion of the battery cell, such that two processes can be integrated into one process, and the process of removing a release paper and attaching the heat-insulating sheet to the battery cell using a double-sided tape can be simplified, thereby reducing a process time.

According to one or more embodiments of the present invention, double-sided tapes attached to the front and rear of a heat-insulating sheet can be attached to each other through an adhesive opening formed in the heat-insulating sheet, which enhances a binding force between the heat-insulating sheet and a battery cell, as well as between the battery cell and the adjacent battery cell, thereby improving the safety of a battery.

However, aspects and effects obtainable through the present disclosure are not limited to the above aspects and effects, and other technical aspects and effects that are not mentioned will be clearly understood by those skilled in the art from the description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

Therefore, the technical scope of the present disclosure should be defined by the claims.

## Claims

1. A battery module comprising:
a plurality of battery cells;
a heat-insulating sheet between adjacent battery cells of the plurality of battery cells to block thermal energy transfer between the adjacent battery cells; and
a fixing member to fix the heat-insulating sheet between the adjacent battery cells.

2. The battery module as claimed in claim 1, wherein the heat-insulating sheet comprises mica.

3. The battery module as claimed in claim 1 or claim 2, wherein the heat-insulating sheet comprises aerogel.

4. The battery module as claimed in any one of the preceding claims, wherein the heat-insulating sheet comprises:
a first sheet portion between the adjacent battery cells to block conductive thermal energy; and
a second sheet portion extending from the first sheet portion and in contact with an upper surface of a battery cell of the adjacent battery cells to block convective thermal energy.

5. The battery module as claimed in claim 4, wherein a rupture portion corresponding to a vent hole of the battery cell is formed in the second sheet portion.

6. The battery module as claimed in any one of the preceding claims, wherein the fixing member comprises a double-sided tape attached to the heat-insulating sheet.

7. The battery module as claimed in claim 6, wherein
the double-sided tape is attached to each of a first surface and a second surface of the heat-insulating sheet, and
the double-sided tape is provided as a plurality of double-sided tapes spaced apart from each other on opposite sides of the heat-insulating sheet.

8. The battery module as claimed in claim 7, wherein the double-sided tape comprises:
a first double-sided tape attached to the first surface of the heat-insulating sheet to be attached to the battery cell; and
a second double-sided tape attached to the second surface of the heat-insulating sheet to be attached to the adjacent battery cell.

9. The battery module as claimed in claim 8, wherein the heat-insulating sheet has an adhesive opening where the first double-sided tape and the second double-sided tape are attached to enhance a binding force.

10. The battery module as claimed in claim 9, wherein the adhesive opening comprises:
an upper adhesive opening that is open such that upper ends of the first double-sided tape and the second double-sided tape are attached to each other; and
a lower adhesive opening that is open such that lower ends of the first double-sided tape and the second double-sided tape are attached to each other.

11. The battery module as claimed in claim 10, further comprising an insulating structure coupled to the adhesive opening,
wherein:
the insulating structure corresponds to an area of the adhesive opening to block the adhesive opening, and
the insulating structure is coupled to the adhesive opening by a binding portion.

12. A method of manufacturing a battery module, the method comprising:
attaching a battery cell to a first surface of a heat-insulating sheet by a double-sided tape; and
attaching a second surface of the heat-insulating sheet to which the battery cell is attached to a previous-side battery cell by another double-sided tape,
wherein the attaching the battery cell and the attaching the second surface of the heat-insulating sheet are repeated a number of times.

13. The method as claimed in claim 12, wherein
the battery cell is inserted into a module jig, and
the attaching the second surface of the heat-insulating sheet is performed in the module jig.

14. The method as claimed in claim 12 or clim 13, wherein
before the attaching the battery cell,
the double-sided tapes are attached to the first surface and the second surface of the heat-insulating sheet, and
the double-sided tapes are attached to each other through an adhesive opening of the heat-insulating sheet.

15. The method as claimed in claim 14, wherein
the double-sided tapes are separately attached to opposite sides of the heat-insulating sheet, and
the adhesive opening is blocked by an insulating structure.
